# EUROPEAN PATENT APPLICATION

(11) **EP 2 056 251 A1**
(43) Date of publication of application: **06.05.2009**
(21) Application number: 07744549.2
(22) Date of filing: 01.06.2007
(51) Int. Cl.: G06T 1/20

(54) **IMAGE PROCESSING APPARATUS, IMAGE PROCESSING SYSTEM AND IMAGE PROCESSING METHOD**

(30) Priority: 02.08.2006 JP 2006211316
(71) Applicant: Fuji System Machines Co., Ltd., Zama-shi, Kanagawa 228-0003 (JP); Optgraph, Inc., Nagoya-shi, Aichi 460-0008 (JP)
(72) Inventor: NOTSU, Risei, Zama-shi Kanagawa 228-0003 (JP); KUSHIDA, Takashi, Zama-shi Kanagawa 228-0003 (JP); YUZAKI, Shin, Nagoya-shi Aichi 460-0008 (JP)
(74) Representative: HOFFMANN EITLE
(86) International application number: PCT/JP2007/061161
(87) International publication number: WO 2008/015836

(57) **Abstract**

An image processing apparatus according to the present invention includes a vector processor which performs vector processing on image data, and a scalar processor which performs scalar processing on the image data having undergone the vector processing.

## Description

### TECHNICAL FIELD

The present invention relates to an image processing apparatus, image processing system, and image processing method.

### BACKGROUND ART

An image processing apparatus including a plurality of image processors (to be referred to as GPUs hereinafter) has been conventionally proposed (see, e.g., patent reference 1).
Patent reference 1: Japanese Patent Laid-Open No. 5-143720

### DISCLOSURE OF INVENTION

In the technique of patent reference 1, the plurality of GPUs operate in parallel, so the speed of image processing can be made higher than that when a single GPU operates.

Since the GPUs uniformly perform the image processing, however, the processing speed is sometimes not well increased depending on the contents of the image processing. For example, when the image processing includes scalar processing, it is often impossible to well increase the image processing speed because the GPU is unsuitable for the scalar processing.

It is an aim of the present invention to provide an image processing apparatus, image processing system, and image processing method capable of sufficiently increasing the image processing speed.

An image processing apparatus according to the first aspect of the present invention is characterized by comprising a vector processor which performs vector processing on image data, and a scalar processor which performs scalar processing on the image data having undergone the vector processing.

An image processing system according to the second aspect of the present invention is characterized by comprising an image acquiring apparatus which acquires an image signal of an object by scanning the object, and converts the image signal into image data, the above-mentioned image processing apparatus which performs image processing on the image data, and an external bus which connects the image acquiring apparatus and the image processing apparatus.

An image processing method according to the third aspect of the present invention is characterized by comprising a vector processing step of performing vector processing on image data by using an image processor, and a scalar processing step of performing scalar processing on the image data having undergone the vector processing by using a central processor.

The present invention can well increase the speed of image processing.

Other features and advantages of the present invention will be apparent from the following explanation taken in conjunction with the accompanying drawings. Note that in the accompanying drawings, the same reference numerals denote the same or similar parts.

### BRIEF DESCRIPTION OF DRAWINGS

Fig. 1 is a block diagram of an image processing system according to the first embodiment of the present invention;
Fig. 2 is a flowchart showing the procedure of image processing performed by the image processing system;
Fig. 3 is a flowchart showing the procedure of the image processing;
Fig. 4 is a conceptual view showing an example of image information;
Fig. 5 is a conceptual view showing an example of image information; and
Fig. 6 is a block diagram of an image processing system according to the second embodiment of the present invention.

### BEST MODE FOR CARRYING OUT THE INVENTION

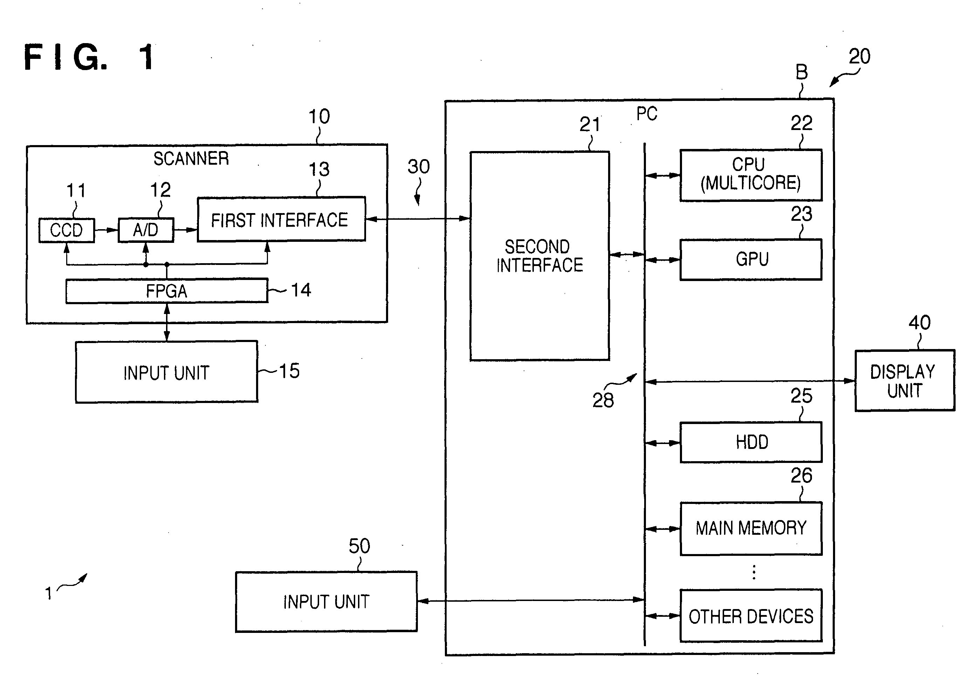

An image processing apparatus according to the first embodiment of the present invention will be explained below with reference to Fig. 1. Fig. 1 is a block diagram of an image processing system according to the first embodiment.

An image processing system 1 includes a scanner 10, PC (Personal Computer) 20, and high-speed external bus 30.

The scanner 10 and PC 20 are connected by the high-speed external bus 30. This makes it possible to transfer data from the scanner 10 to the PC 20 via the high-speed external bus 30.

The arrangement and operation of the scanner 10 will be explained below.

The scanner 10 includes a CCD (Charge Coupled Device) 11, A/D converter 12, first interface 13, FPGA (Field Programmable Gate Array) 14, and input unit 15.

The CCD 11 is connected to the A/D converter 12 and FPGA 14. The A/D converter 12 is connected to the CCD 11, first interface 13, and FPGA 14. The first interface 13 is connected to the high-speed external bus 30, A/D converter 12, and FPGA 14. The first interface 13 is, for example, a serial interface corresponding to the serial ATA method (S-ATA method). The FPGA 14 is connected to the CCD 11, A/D converter 12, and first interface 13. Programs for controlling the CCD 11, A/D converter 12, and first interface 13 are written in the FPGA 14.

The user sets a plurality of sheets of paper as objects to be scanned in an automatic sheet feeder. Predetermined characters and/or figures are drawn on these sheets. A conveyor system is formed between the automatic sheet feeder and a position (to be referred to as a scanning position hereinafter) where the CCD 11 can scan an object.

The user inputs a scan instruction to start scanning to the input unit 15. The FPGA 14 receives the scan instruction from the input unit 15, and activates a program related to the scan instruction.
In accordance with the program, the FPGA 14 controls the conveyor system and conveys the sheets set in the automatic sheet feeder one by one to the scanning position. Under the control of the FPGA 14, the CCD 11 continuously scans the sheet conveyed to the scanning position, and acquires an image of the predetermined characters and/or figures drawn on the sheet as an image signal (analog signal) of the sheet. The CCD 11 supplies the image signal (analog signal) to the A/D converter 12.

The A/D converter 12 converts the image signal (analog signal) into image data (a digital signal). The A/D converter 12 supplies the image data (digital signal) to the first interface 13. The rate of this data transfer from the A/D converter 12 to the first interface 13 is, for example, 2 Gbps. The first interface 13 sends the image data to the PC 20 via the high-speed external bus 30. The transfer rate of the data sent from the first interface 13 to the high-speed external bus 30 is the same as the rate of data transfer from the A/D converter 12 to the first interface 13, for example, 2 Gbps.

The arrangement and operation of the PC 20 will now be explained.

The PC 20 has a main body B, input unit 50, and display unit 40.

The input unit 50 and display unit 40 are connected to the main body B.

The main body B includes a second interface 21, CPU 22, GPU 23, HDD 25, main memory 26, and high-speed internal bus 28.

The second interface 21, CPU 22, GPU 23, HDD 25, main memory 26, input unit 50, and display unit 40 are connected to each other via the high-speed internal bus 28. The high-speed internal bus 28 uses, for example, the PCI-Express method by 16 parallel connections in a portion from the second interface 21 to the GPU 23. The band rate (bandwidth) of the high-speed internal bus 28 is, for example, 2.5 Gbps x 16 = 40 Gbps in the portion from the second interface 21 to the GPU 23. The second interface 21 is further connected to the high-speed external bus 30. The second interface 21 is, for example, a serial interface corresponding to the S-ATA method. An image processing program and the like are stored in the HDD 25. The band rate from the GPU 23 to the high-speed internal bus 28 is lower than that from the high-speed internal bus 28 to the GPU 23.

The second interface 21 receives image data from the scanner 10 via the high-speed external bus 30. The second interface 21 supplies the image data to a GPU memory via the high-speed internal bus 28 and GPU 23. The GPU memory stores the image data. The second interface 21 also supplies the image data to the CPU 22, HDD 25, and main memory 26 as needed.

The CPU 22 displays, on the display unit 40, an image indicated by the image data temporarily stored in the main memory 26. The user having watched the image displayed on the display unit 40 inputs an instruction concerning image processing to the input unit 50.

The GPU 23 receives the instruction concerning image processing via the high-speed internal bus 28, and activates the image processing program transferred from the HDD 25 to the GPU memory and stored in it beforehand. In accordance with the image processing program, the GPU 23 refers to the GPU memory, and performs vector processing on the image data stored in the GPU memory. The vector processing includes, for example, processing grid data. The GPU 23 supplies the image data having undergone the vector processing to the main memory 26 via the high-speed internal bus 28. The CPU 22 refers to the main memory 26 via the high-speed internal bus 28, and performs scalar processing on the image data having undergone the vector processing. The scalar processing includes, for example, an arithmetic operation including conditional branch. Alternatively, the scalar processing is, for example, a numerical operation.

A case where the GPU 23 and CPU 22 may also operate parallel by dividing the processing randomly is considered. In this case, data is transferred from the GPU 23 to the main memory 26, and the CPU 22 refers to the data. Since the band rate from the GPU 23 to the high-speed internal bus 28 is lower than that from the high-speed internal bus 28 to the GPU 23, the image processing speed may not well increase due to the delay of data transfer from the GPU 23 to the main memory 26.

By contrast, in the first embodiment of the present invention, the GPU 23 performs vector processing on image data, and the CPU 22 performs scalar processing on the image data having undergone the vector processing. That is, the GPU 23 is suitable for vector processing and unsuitable for scalar processing, and hence can perform only vector processing at high speed. Also, since the amount of data transferred from the GPU 23 to the CPU 22 is decreased to a minimum necessary amount, the delay of data transfer from the GPU 23 to the main memory 26 is also suppressed. In addition, the CPU 22 is suitable for scalar processing and unsuitable for vector processing, and hence can perform only scalar processing at high speed. Accordingly, the image processing speed can be well increased as a whole.

The arrangement and operation of the high-speed external bus 30 will be explained below.

The high-speed external bus 30 connects the first interface 13 of the scanner 10 and the second interface 21 of the PC 20. The high-speed external bus 30 includes, for example, a bus adopting the serial ATA method (S-ATA method).

Some conventional techniques use a bus adopting the IEEE1394 method as an external bus connecting a scanner and printer. In this case, the band rate (bandwidth) of the external bus is, for example, 800 Mbps. That is, when the internal data transfer rate of the scanner is 2 Gbps, the band rate (bandwidth) of the external bus is lower than the internal data transfer rate of the scanner. This may make it difficult to perform high-speed data transfer from the scanner to a personal computer.

By contrast, the scanner 10 and PC 20 are connected via the high-speed external bus 30 in the invention according to the first embodiment. The high-speed external bus 30 is, for example, a bus using the serial ATA method (S-ATA method). In this case, the band rate (bandwidth) of the high-speed external bus 30 is, for example, 3 Gbps. That is, when the internal data transfer rate of the scanner is 2 Gbps, the band rate (bandwidth) of the high-speed external bus 30 is higher than the internal data transfer rate of the scanner. Therefore, data can be transferred at high speed from the scanner to the personal computer.

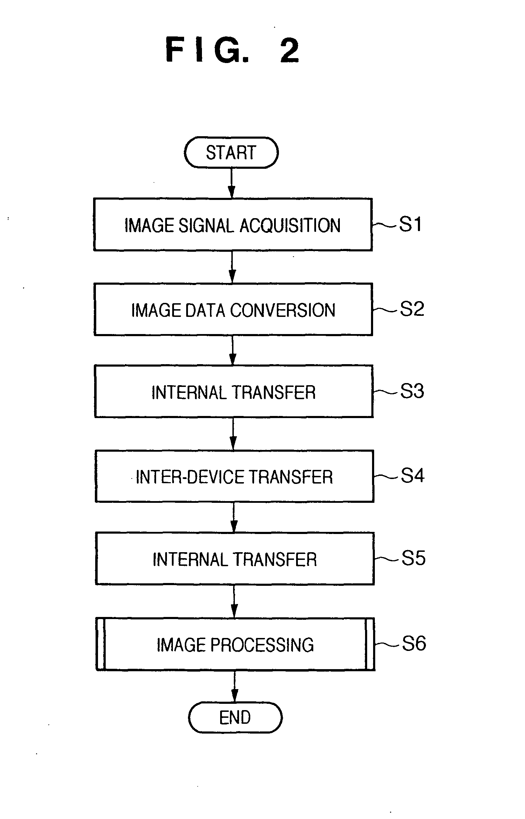

The procedure of image processing performed by the image processing system will be explained below with reference to a flowchart shown in Fig. 2.

In step S1, the CCD 11 of the scanner 10 acquires an image signal.

That is, the user sets a plurality of sheets of paper as objects to be scanned in an automatic sheet feeder (not shown) of the scanner 10. Predetermined characters and/or figures are drawn on these sheets. A conveyor system is arranged between the automatic sheet feeder and a position (to be referred to as a scanning position hereinafter) where the CCD 11 can scan.

The user inputs a scan instruction to start scanning to an input unit (not shown). The FPGA 14 receives the scan instruction from the input unit, and activates a program related to the scan instruction. In response to the program, the FPGA 14 controls the conveyor system and conveys the sheets set in the automatic sheet feeder one by one to the position where the CCD 11 can scan an object. Under the control of the FPGA 14, the CCD 11 continuously scans the sheet conveyed to the scanning position, and acquires an image of predetermined characters and/or figures drawn on the sheet as an image signal (analog signal) of the sheet.

In step S2, the A/D converter 12 converts the image signal into image data.

That is, the CCD 11 of the scanner 10 supplies the image signal (analog signal) to the A/D converter 12. The A/D converter 12 converts the image signal (analog signal) into image data (a digital signal).

In step S3, data transfer (internal transfer) is performed inside the scanner 10.

That is, the A/D converter 12 supplies the image data to the first interface 13. The rate of this image data transfer from the A/D converter 12 to the first interface 13 is, for example, 2 Gbps.

In step S4, data transfer (inter-device transfer) is performed between the scanner 10 and PC 20.

That is, the first interface 13 sends the image data to the PC 20 via the high-speed external bus 30. The transfer rate of the data sent from the first interface 13 to the high-speed external bus 30 is the same as the rate of data transfer from the A/D converter 12 to the first interface 13, for example, 2 Gbps as a serial transfer rate. By contrast, the band rate (bandwidth) of the high-speed external bus 30 is, for example, 3 Gbps.

The band rate of the high-speed external bus 30 is higher than the rate of image data transfer from the A/D converter 12 to the first interface 13. That is, the band rate of the high-speed external bus 30 is higher than the transfer rate of image data sent from the first interface 13 to the high-speed external bus 30. Accordingly, the high-speed external bus 30 can transfer the image data to the PC 20 at almost the same rate as the rate of transfer from the scanner 10. That is, the image data can be transferred at high speed from the scanner 10 to the PC 20.

In step S5, data transfer (internal transfer) is performed inside the PC 20.

That is, the second interface 21 receives the image data from the scanner 10 via the high-speed external bus 30. The second interface 21 supplies the image data to the GPU memory via the high-speed internal bus 28 and GPU 23. The GPU memory stores the image data. The second interface 21 also supplies the image data to the CPU 22, HDD 25, and main memory 26 as needed.

In step S6, the GPU 23 performs image processing.

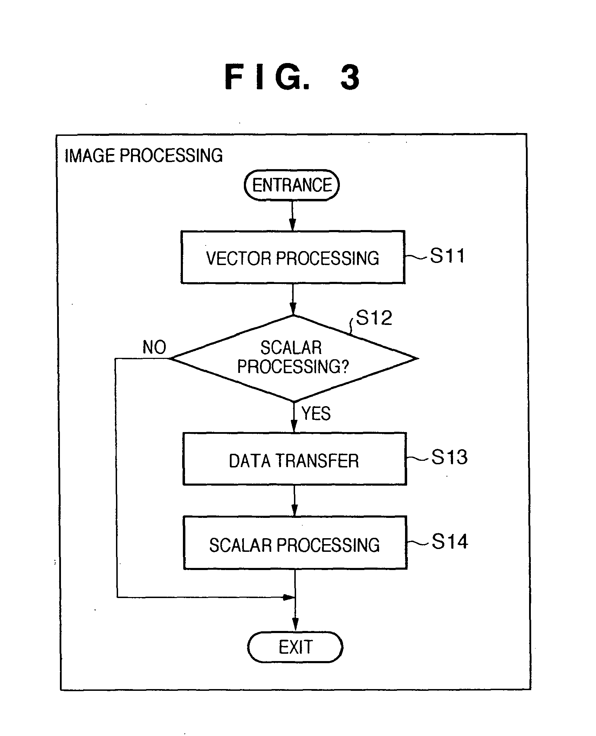

Details of the image processing (step S6 shown in Fig. 2) will be explained below with reference to a flowchart shown in Fig. 3.

In step S11, the GPU 23 performs vector processing. That is, an instruction pertaining to the image processing is input to the input unit 50. The GPU 23 receives the instruction pertaining to the image processing via the high-speed internal bus 28, and activates the image processing program transferred from the HDD 25 to the GPU memory and stored in it beforehand, thereby specifying vector processing and scalar processing. The GPU 23 then refers to the GPU memory, and performs vector processing on the image data stored in the GPU memory. The vector processing includes, for example, processing grid data.

In step S12, the GPU 23 determines whether to perform scalar processing. That is, the GPU 23 determines whether the process contents include scalar processing in the program corresponding to the instruction concerning the image processing. If the GPU 23 determines that the process contents include scalar processing, the GPU 23 advances the process to step S13. If the GPU 23 determines that the process contents include no scalar processing, the GPU 23 terminates the process.

In step S13, the GPU 23 performs data transfer. That is, the GPU 23 transfers the image data having undergone the vector processing and information indicating the contents of the scalar processing to the main memory 26 via the high-speed internal bus 28.

In step S14, the CPU 22 performs the scalar processing. That is, the CPU 22 refers to the main memory 26, and acquires the image data having undergone the vector processing and the information indicating the contents of the scalar processing. The CPU 22 then performs the scalar processing on the image data having undergone the vector processing. The scalar processing includes, for example, an arithmetic operation including conditional branch. Alternatively, the scalar processing includes, for example, a numerical operation.

If the process contents include no scalar processing in the program corresponding to the instruction concerning the image processing, the GPU 23 alone performs the processing, so the image processing speed can be sufficiently increased.

Working examples 1 and 2 will be explained below as examples of the image processing.

First, working example 1 will be explained with reference to Fig. 3.

In step S11, an instruction concerning the image processing is input to the input unit 50. The GPU 23 receives the instruction concerning the image processing via the high-speed internal bus 28, and activates the image processing program transferred from the HDD 25 to the GPU memory and stored in it beforehand, thereby specifying RenderTexture processing. The RenderTexture processing includes processing that directly uses the last processed image data stored in the GPU memory as a texture (input image). The RenderTexture processing includes vector processing and does not include scalar processing.

In step S12, the GPU 23 determines that the process contents include no scalar processing in the program corresponding to the instruction pertaining to the image processing, and terminates the process.

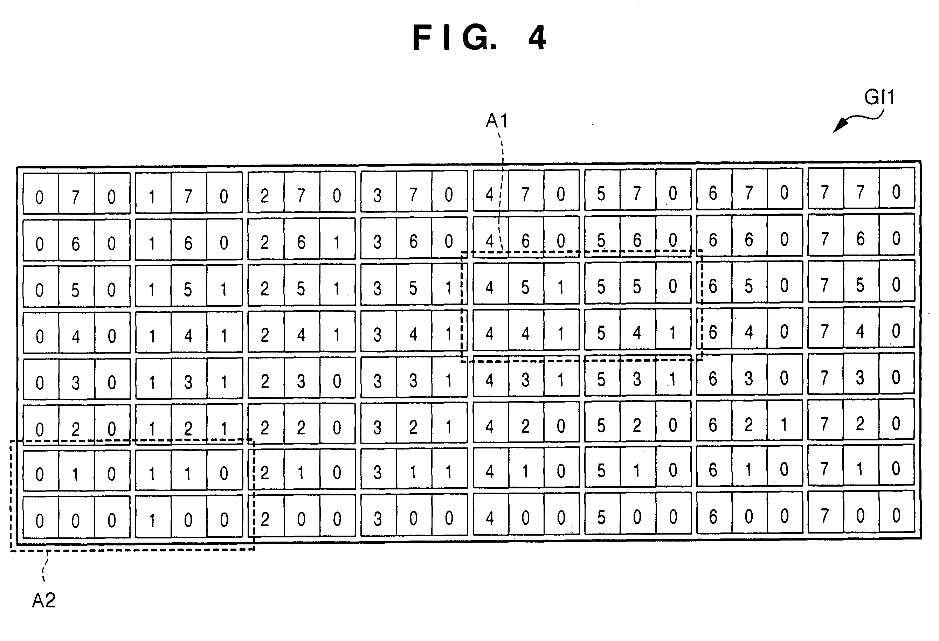

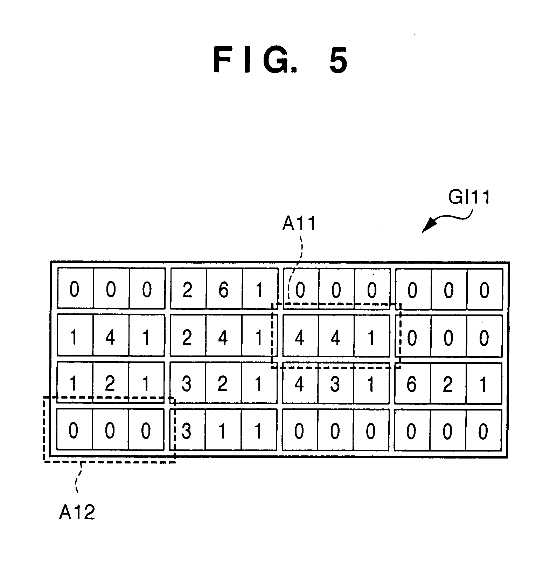

Working example 2 will now be explained with reference to Figs. 3 to 5. Figs. 4 and 5 are conceptual views showing examples of image information.

In step S11, an instruction concerning the image processing is input to the input unit 50. The GPU 23 receives the instruction concerning the image processing via the high-speed internal bus 28, and activates the image processing program transferred from the HDD 25 to the GPU memory and stored in it beforehand, thereby specifying a specific position detecting process. The specific position detecting process is a process of specifying the color gamut of a specific position in an image indicated by image data. The specific position detecting process includes both vector processing and scalar processing.

More specifically, the GPU 23 generates image information GI1 by numerically expressing and mapping the color gamut of each pixel in an image indicated by the image data. In the case shown in Fig. 4, for example, three horizontally arranged numbers correspond to one pixel, and the arrangement of the three numbers indicate the color gamut.

Then, the GPU 23 halves the resolution of the image information GI1. In this processing, the GPU 23 selects a pixel having a minimum coordinate value from four pixels. In the case shown in Fig. 4, for example, a lower left pixel "441" is selected in a four-pixel area A1, and a lower left pixel "000" is selected in a four-pixel area A2. The GPU 23 repeats this processing until the resolution of the image information becomes about 16 x 16. As a result, image information GI11 shown in Fig. 5 is obtained.

In step S12, the GPU 23 determines that the process contents include scalar processing in the program corresponding to the instruction pertaining to the image processing, and advances the process to step S13.

In step S13, the GPU 23 transfers the image data (e.g., the image information GI11 shown in Fig. 5) having undergone vector processing and information indicating the contents of scalar processing in the specific position detecting process to the main memory 26 via the high-speed internal bus 28.

Since the band rate from the GPU 23 to the high-speed internal bus 28 is lower than that from the high-speed internal bus 28 to the GPU 23, the data capacity of the image data and the information indicating the contents of the scalar processing transferred from the GPU 23 to the main memory 26 is preferably small. Also, the smaller the data capacity of data, the faster the CPU 22 can process the data. The data capacity of the image data and the information indicating the contents of the scalar processing transferred from the GPU 23 to the main memory 26 is preferably small from this viewpoint as well.

In step S14, the CPU 22 refers to the main memory 26, and acquires the image data (e.g., the image information GI11 shown in Fig. 5) having undergone the vector processing and the information indicating the contents of the scalar processing in the specific position detecting process. The CPU 22 then performs the scalar processing on the image data having undergone the vector processing.

More specifically, the CPU 22 obtains the color gamuts of minimum and maximum coordinate values of the image data having undergone the vector processing.

When obtaining the color gamut of a minimum coordinate value in the case shown in Fig. 5, for example, the CPU 22 selects a lower left area of four four-pixel areas in the image information GI11. The CPU 22 selects a lower left pixel "000" in the lower left four-pixel area. Then, the CPU 22 specifies that the color gamut of the minimum coordinate value is a color gamut indicated by "000".

When obtaining the color gamut of a maximum coordinate value in the case shown in Fig. 5, for example, the CPU 22 selects an upper right area of the four four-pixel areas in the image information GI11. The CPU 22 selects a lower left pixel "441" in the upper right four-pixel area. Then, the CPU 22 specifies that the color gamut of the maximum coordinate value is a color gamut indicated by "441".

Note that a scan instruction to cause the scanner 10 to start scanning may also be input to the input unit 50 of the PC 20, instead of the input unit 15 of the scanner 10. In this case, the scan instruction is supplied from the input unit 50 to the FPGA 14 via the high-speed internal bus 28, second interface 21, high-speed external bus 30, and first interface 13.

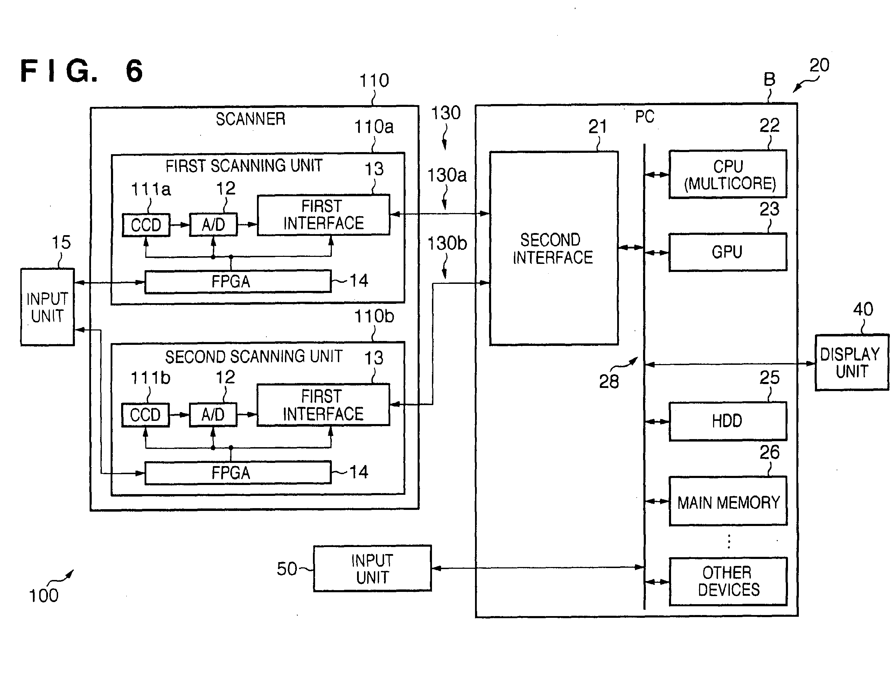

An image processing system according to the second embodiment of the present invention will be explained below with reference to Fig. 6. Fig. 6 is a block diagram of the image processing system according to the second embodiment. In the following description, portions different from the first embodiment will mainly be explained, and an explanation of similar portions will not be repeated.

Although the basic configuration of an image processing system 100 is the similar as that of the first embodiment, the image processing system 100 differs from the first embodiment in that a scanner 110 is used instead of the scanner 10, and high-speed external buses 130 are used instead of the high-speed external bus 30.

The scanner 110 includes first and second scanning units 110a and 110b. The first scanning unit 110a includes a CCD 111a instead of the CCD 11. The second scanning unit 110b includes a CCD 111b instead of the CCD 11. The CCDs 111a and 111b are opposed to each other on the two sides of a scanning position. When a sheet of paper as an object is conveyed to the scanning position, therefore, the CCDs 111a and 111b can scan the front and back surfaces of the sheet.

The high-speed external buses 130 include first and second high-speed external buses 130a and 130b. The first high-speed external bus 130a connects the first scanning unit 110a and a PC 20, and the second high-speed external bus 130b connects the second scanning unit 110b and PC 20. The relationship between the internal data transfer rate of the first scanning unit 110a and the band rate of the first high-speed external bus 130a is the same as that between the internal data transfer rate of the scanner 10 and the band rate of the high-speed external bus 30 in the first embodiment. The relationship between the internal data transfer rate of the second scanning unit 110b and the band rate of the second high-speed external bus 130b is also the same as that between the internal data transfer rate of the scanner 10 and the band rate of the high-speed external bus 30 in the first embodiment. Therefore, image data can be transferred at high speed from the scanner 110 to the PC 20.

Processing (image processing S6 shown in Fig. 2) performed by a CPU 22, GPU 23, GPU memory, and main memory 26 of the PC 20 is also the same as that in the first embodiment.

Accordingly, even when the image processing system 100 as described above can well increase the image processing speed.

The present invention is not limited to the above embodiments and various changes and modifications can be made without departing from the spirit and scope of the invention. Therefore, to apprise the public of the scope of the present invention, the following claims are appended.

## Claims

1. An image processing apparatus **characterized by** comprising:
a vector processor which performs vector processing on image data; and
a scalar processor which performs scalar processing on the image data having undergone the vector processing.

2. The image processing apparatus according to claim 1, **characterized in that**
the vector processor receives an instruction concerning image processing, and supplies the image data having undergone the vector processing to the scalar processor if the vector processor determines that the image processing includes scalar processing.

3. The image processing apparatus according to claim 1 or 2, **characterized in that**
the vector processor includes an image processor, and
the scalar processor includes a central processor.

4. The image processing apparatus according to any one of claims 1 to 3, **characterized in that**
the vector processing includes processing grid data, and
the scalar processing includes at least one of an arithmetic operation including conditional branch operation and a numerical operation.

5. The image processing apparatus according to any one of claims 1 to 4, **characterized by** further comprising an internal bus arranged between the vector processor and the scalar processor,
wherein a band rate from the vector processor to the internal bus is lower than a band rate from the internal bus to the vector processor.

6. An image processing system **characterized by** comprising:
an image acquiring apparatus which acquires an image signal of an object by scanning the object, and converts the image signal into image data;
an image processing apparatus according to any one of claims 1 to 5, which performs image processing on the image data; and
an external bus which connects the image acquiring apparatus and the image processing apparatus.

7. An image processing method **characterized by** comprising:
a vector processing step of performing vector processing on image data by using an image processor; and
a scalar processing step of performing scalar processing on the image data having undergone the vector processing by using a central processor.
